Europäisches Patentamt

European Patent Office

Office européen des brevets

(11) Veröffentlichungsnummer: **0 515 989 A2**

# EUROPÄISCHE PATENTANMELDUNG

(21) Anmeldenummer: **92108638.5**

(51) Int. Cl.5: **H04L 12/56**

(22) Anmeldetag: **21.05.92**

(30) Priorität: **28.05.91 DE 4117491**

(43) Veröffentlichungstag der Anmeldung:
**02.12.92 Patentblatt 92/49**

(84) Benannte Vertragsstaaten:
**DE FR GB**

(71) Anmelder: **SIEMENS AKTIENGESELLSCHAFT**
**Wittelsbacherplatz 2**
**W-8000 München 2(DE)**

(72) Erfinder: **Holzner, Rudolf**
**Luitpoldstrasse 53a**
**W-8300 Landshut(DE)**
Erfinder: **Tomann, Stefan, Dipl.-Ing.**
**Ahornring 18**
**W-8028 Taufkirchen(DE)**

(54) Verfahren zur Auswahl eines Vermittlungswegabschnittes.

(57) Mehrstufige Verbindungsnetzwerke, z.B. für Multiprozessorsysteme, basieren auf Schaltelementen, die in mehreren Stufen zu einem Netzwerk zusammengeschaltet sind. Zur Ausnutzung redundanter Vermittlungswege in solchen Netzwerken zum Zweck der Steigerung des Netzwerkdurchsatzes wird ein Verfahren zur Auswahl eines Vermittlungswegabschnittes in einem solchen Netzwerk vorgeschlagen.

FIG 4

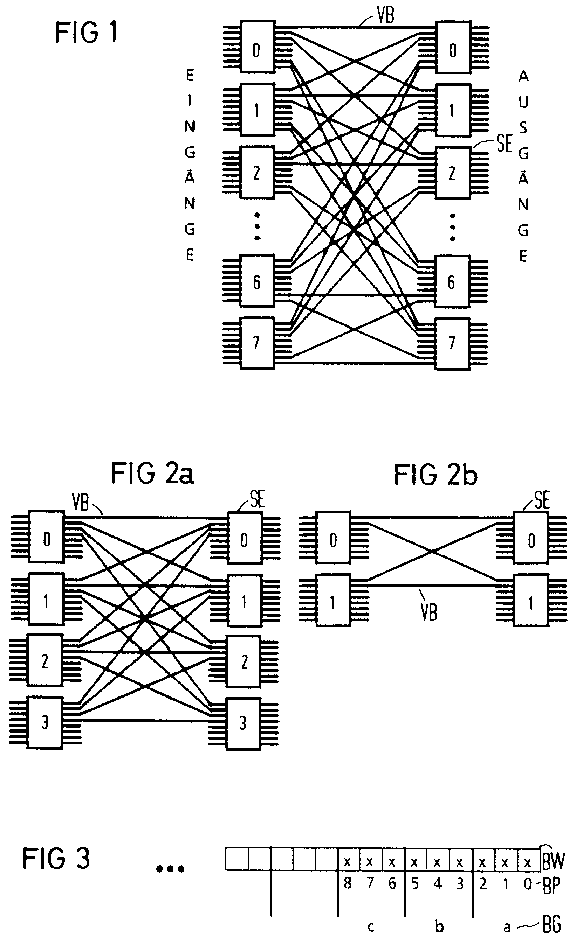

Zur Vermittlung von Nachrichten, insbesondere zur Vermittlung von Paketen, z.B. in Multiprozessorsystemen, werden mehrstufige Verbindungsnetzwerke verwendet. Diese werden aus standardisierten Schaltelementen mit M-Eingängen und M-Ausgängen aufgebaut, und sind je nach ihrer Größe in der Lage, Nachrichten zwischen einer Anzahl N von Netzwerkknoten zu vermitteln, wobei N im allgemeinen wesentlich größer als M ist. Ein typisches Netzwerk dieser Art bzw. ein Teilnetzwerk eines komplexeren Netzwerkes dieser Art ist in Figur 1 schematisch dargestellt. Hier ist ein zweistufiges (Teil ) Netzwerk der Größe N = 64 aus zwei Stufen zu je acht Schaltelementen der Größe M = 8 aufgebaut. Das in Figur 1 dargestellte Netzwerk ist in dem Sinne vollständig, daß jedes Schaltelement der ersten Stufe mit jedem Schaltelement der zweiten Stufe über einen Vermittlungswegabschnitt verbunden ist. Netzwerke dieser Art sind in der Literatur bekannt und z.B. in dem Buch von Kai Hwang, Faye A.Briggs, Computer Architecture and Parallel Processing, McGraw-Hill,N.Y., 1987, Seite 492 ff beschrieben.

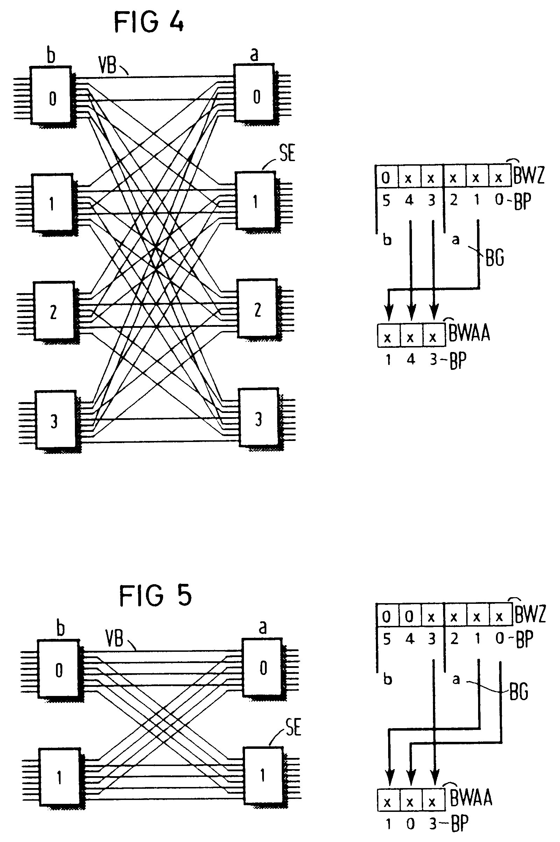

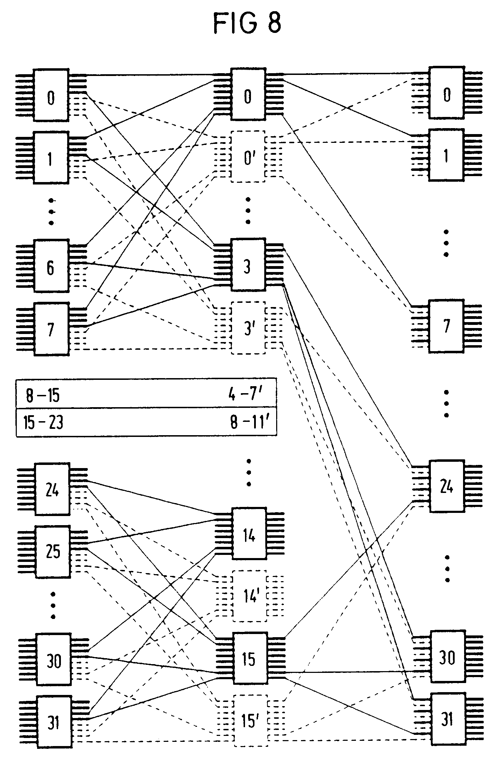

Baut man aus Schaltelementen der Größe 8 kleinere Netzwerke, wie z.B. in den Figuren 2a bzw. 2b dargestellt, auf, so ergibt sich zunächst, daß zur Erreichung einer vollständigen Verbindung in dem Sinne, daß jedes Schaltelement der Stufe 1 mit jedem Schaltelement der Stufe 2 verbunden ist, nur ein Teil der Pins der Schaltelemente benötigt wird. Unter Pins werden in dieser Patentanmeldung Ein-/Ausgänge verstanden, die ggf. parallel mehrere Bits umfassen. Die unbenutzten Pins der Schaltelemente können zum Aufbau weiterer Vermittlungswegabschnitte herangezogen werden, welche redundant sind und welche sich zur Erhöhung des Netzwerkdurchsatzes oder zur Erreichung einer Fehlertoleranz des Netzwerkes verwenden lassen. In Figur 4 ist beispielsweise ein solches Netzwerk dargestellt, in dem zur Vermittlung von Nachrichten zwischen jedem Schaltelement der Stufe b und jedem Schaltelement der Stufe a zwei Vermittlungswegabschnitte zur Verfügung stehen. In Figur 5 ist weiterhin ein Netzwerk dargestellt, in dem zur Vermittlung von Nachrichten zwischen je zwei Schaltelementen verschiedener Stufen vier Vermittlungswegabschnitte zur Verfügung stehen. Schließlich ist in Figur 8 ein komplexes dreistufiges Netzwerk dargestellt, welches aus einfacheren zweistufigen Netzwerken aufgebaut ist, welche sämtlich aus Schaltelementen der Größe M = 8 aufgebaut sind.

In solchen redundanten Netzwerken mit mehreren Vermittlungswegabschnitten zwischen je zwei Schaltelementen verschiedener Stufen ergibt sich das technische Problem der Auswahl eines Vermittlungswegabschnittes für eine gegebene Zieladresse. Dieses Problem entsteht dadurch, daß die Zahl der Eingangs- bzw. Ausgangsknoten eines Netzwerkes mit redundanten Vermittlungswegabschnitten geringer ist als die Zahl der zur Verfügung stehenden Vermittlungswegabschnitte. Aus diesem Grunde wird von den Prozessoren, welche ein solches Netz zur Kommunikation benutzen, im allgemeinen ein Intervall von Zieladressen verwaltet, welches eine Teilmenge der Adressen aller möglichen Vermittlungswege bildet. Ein Vermittlungsweg ist die Konkatenation der ihn konstituierenden Vermittlungswegabschnitte. Bei der Generierung von Adressen zu Vermittlungswegabschnitten aus einer vorgegebenen Netzwerkadresse (Knotenadresse) kommt es darauf an, die überzähligen Vermittlungswege möglichst gleichmäßig auszulasten, damit im Sinne einer Maximierung des Netzwerkdurchsatzes keine unerwünschten Konzentrationen auf bestimmte Gruppen von Vermittlungswegen auftreten.

Der Erfindung liegt die Aufgabe zugrunde, ein Verfahren anzugeben, mit welchem für eine gegebene Zieladresse, d.h. für einen gegebenen Netzwerkknoten, an welchen eine Nachricht gesendet werden soll, ein Vermittlungswegabschnitt zwischen zwei Schaltelementen in verschiedenen Stufen eines Netzwerkes so ausgewählt wird, daß ein möglichst hoher Netzwerkdurchsatz infolge einer möglichst gleichmäßigen Ausnutzung der redundanten Vermittlungswegabschnitte resultiert. Diese Aufgabe wird mit Hilfe eines Verfahrens zur Auswahl eines Vermittlungswegabschnittes in einem zweistufigen Netzwerk aus mehrpoligen Schaltelementen mit Merkmalen nach Anspruch 1 gelöst.

Eine weitere Aufgabe der Erfindung besteht darin, ein Verfahren anzugeben, welches fehlertolerant ist in dem Sinn, daß bei Ausfall eines Vermittlungswegabschnittes die Übermittlung von Nachrichten über diesen Vermittlungswegabschnitt unterbunden werden kann, und diese Nachricht über intakte Vermittlungswegabschnitte umgeleitet werden. Diese Aufgabe wird mit Hilfe eines Verfahrens zur Auswahl eines Vermittlungswegabschnittes mit Merkmalen nach Anspruch 2 gelöst.

Bei der erfindungsgemäßen Lösung wird für eine Zieladresse, welche aus mindestens $m + n$ binären Werten besteht, wobei $n$ kleiner als $m$ ist, ein Vermittlungswegabschnitt, welcher durch $m$ binäre Stellen charakterisiert ist, in der Weise ausgewählt, daß $n$ binäre Stellen des Vermittlungswegabschnittes mit $n$ binären Werten der Zieladresse identifiziert werden und $m - n$ binäre Werte der Zieladresse ausgewählt und den restlichen $m - n$ binären Stellen des Vermittlungswegabschnittes zugeordnet werden. Dieses Verfahren hat den Vorteil, daß die Auswahl von Vermittlungswegabschnitten in ausschließlich lokaler Weise geschieht, und daß an jedem Schaltelement anhand der Zieladresse, welche keine eindeutige Auswahl eines Vermittlungswegabschnittes erlaubt, ein Vermittlungswegabschnitt ausgewählt wird, wobei gewährleistet ist, daß im Mittel sämtliche Vermittlungswegabschnitte, welche zur Übermittlung von Nachrichten an

2

dieselbe Zieladresse geeignet sind, gleichmäßig ausgelastet werden. Die Erzeugung von Adressen für Vermittlungswege ist daher nicht unbedingt von einem Prozessorelement, welches das Netz benutzt, zu bewerkstelligen. Vielmehr kann die Auswahl von Vermittlungswegabschnitten lokal und innerhalb des Netzes erfolgen, wodurch insbesondere die Netztopologie dem Prozessorelement nicht bekannt sein muß. Bei mehrstufigen Netzwerken mit mehr als 2 Stufen (Figur 8) ist es mit dem hier beschriebenen Verfahren möglich, ganze Schaltelemente, die zur Übertragung nicht mehr zur Verfügung stehen, zu umgehen.

Figur 1 zeigt ein zweistufiges Netzwerk mit je acht Schaltelementen pro Stufe, welche je acht Eingangs- und Ausgangspins besitzen.

Figur 2a zeigt ein zweistufiges Netzwerk mit vier Schaltelementen pro Stufe bei unvollständiger Ausnutzung der Schaltelementkapazitäten.

Figur 2b zeigt ein zweistufiges Netzwerk mit zwei Schaltelementen pro Stufe bei unvollständiger Ausnutzung der Schaltelementkapazitäten.

Figur 3 zeigt eine Zerlegung der Zieladresse in Bitgruppen.

Figur 4 zeigt ein zweistufiges Netzwerk mit vier Schaltelementen pro Stufe, bei dem jedes Schaltelement der Stufe b mit jedem Schaltelement der Stufe a über zwei Vermittlungswegabschnitte verbunden ist, und ein Schema zur Auswahl von Vermittlungswegabschnitte nach dem erfindungsgemäßen Verfahren.

Figur 5 zeigt ein zweistufiges Netzwerk mit je zwei Schaltelementen pro Stufe, bei dem jedes Schaltelement der Stufe b mit jedem Schaltelement der Stufe a durch vier Vermittlungswegabschnitte verbunden ist, und ein Schema zur Auswahl von Vermittlungswegabschnitten in diesem Netz nach dem erfindungsgemäßen Verfahren.

Figur 6 zeigt ein zweistufiges Netzwerk mit vier Schaltelementen pro Stufe, bei dem einige Vermittlungswegabschnitte nicht funktionsfähig bzw. nicht vorgesehen sind, und ein Schema zur Auswahl von Vermittlungswegabschnitten nach dem erfindungsgemäßen Verfahren unter Auslassung der nicht funktionsfähigen bzw. nicht vorliegenden Vermittlungswegabschnitte.

Figur 7 zeigt ein Schaltungsbeispiel zur Realisierung einer Teilschaltung in einem Schaltelement zur Auswahl von Vermittlungswegabschnitten nach dem erfindungsgemäßen Verfahren.

Figur 8 zeigt ein komplexes dreistufiges Netzwerk aus Schaltelementen der Größe 8.

Im folgenden wird die Erfindung anhand eines bevorzugten Ausführungsbeispieles und mit Hilfe der Figuren beschrieben.

Ausgangspunkt des erfindungsgemäßen Verfahrens bildet die in paketvermittelnden mehrstufigen Netzwerken übliche Vorgehensweise, dem zu übertragenden Datenpaket bzw. der zu übertragenden Nachricht eine binär codierte Adresse (Zieladresse des Netzwerkausgangs), an welchen diese Nachricht vermittelt werden soll, voranzustellen. Jedes Datenpaket führt somit die Information, an welchen Netzwerkausgang es zu vermitteln ist, mit sich. Diese Information kann z.B. in einem oder mehreren dem Paket vorangestellten Adreßbits abgelegt sein. Ein Verfahren, wie in einem Schaltelement aus der Zieladresse des Datenpaketes der zu benutzenden Netzwerkausgang bestimmt wird, wurde von D.H. Lawrie in seinem Aufsatz "Access and Alignment of Data in an Array Processor" IEEE, Transactions on Computers, Dec. 1975 unter dem Namen "Destination Tag Routing" veröffentlicht. Damit z.B. von einem Schaltelement der Größe M = 8 (im folgenden auch als 8 x 8 Schalter bezeichnet) eine der acht möglichen Ausgänge bzw. Vermittlungswegabschnitte deterministisch ausgewählt werden kann, müssen drei Bits der Zieladresse selektiert und gruppiert werden. Diese drei Bits stellen dann die Nummer des Ausgangs des Schaltelements dieser Stufe in Binärform dar.

Figur 3 zeigt eine Beispielzieladresse, welche aus drei Bitgruppen, a, b bzw. c zu je drei Bit (0, 1, 2), (3, 4, 5), bzw. (6, 7, 8) bestehen. Dabei bezeichnen die Ziffern zwischen 0 und 8 die Bitpositionen oder Bitnummern der jeweiligen Zieladressen-Bits. Die Kreuze in den quadratischen Kästchen in Figur 3 bezeichnen die variablen Werte der jeweiligen Bits der Zieladresse. Diese können die Werte "0" bzw. "1" annehmen. In einem dreistufigen Netzwerk mit den Stufen a, b und c wird in den Schaltern der Stufe a die Bitgruppe a zur Adressierung eines Schaltelementeausgangs bzw. Vermittlungswegabschnittes verwendet, in der Stufe b die Gruppe b und in der Stufe c die Gruppe c. Diese Vorgehensweise kann auf eine beliebige Zahl von Stufen ausgedehnt werden. Wenn in dieser Patentanmeldung von zwei-stufigen Netzwerken gesprochen wird, ist dieser Ausdruck in mehrstufigen Netzwerken ggf. auch im Sinne eines Teilnetzwerkes aus zwei Stufen zu verstehen.

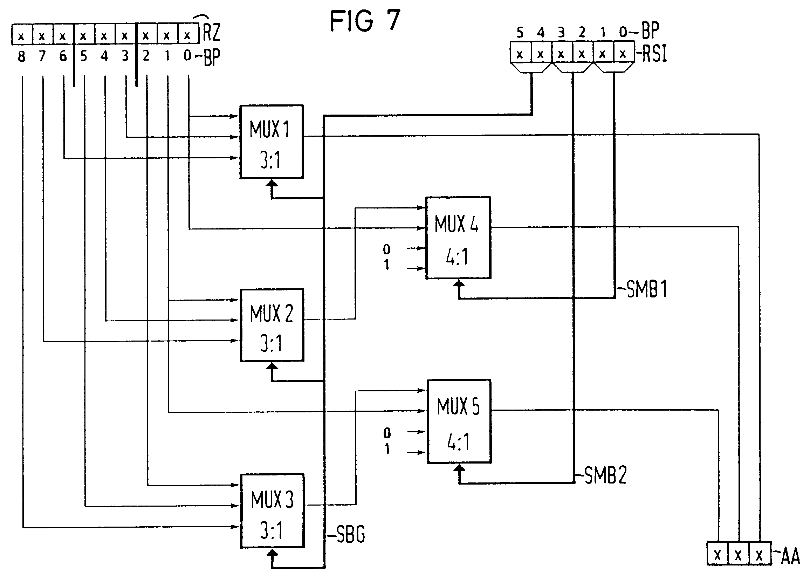

Um festzulegen, in welcher Stufe des Netzwerks sich ein Schaltelement befindet, sind prinzipiell zwei Verfahren möglich. Bei der ersten Variante wird von außen z.B. über Register (siehe Figur 7) eine Steuerinformation RSI eingestellt, welche dem Schaltelement angibt, welche Bitgruppe (a,b,c, etc.) er für die Auswahl eines Verbindungswegabschnittes zu benutzen hat. Die RSI Bits steuern z.B. einen Multiplexer (siehe Figur 7) welcher aus den gesamten Zieladresse die gerade benötigte Bitgruppe auswählt. Dieses Verfahren ist an einem Schaltungsbeispiel (Figur 7) dargestellt. Bei einem anderen Verfahren werden die in

3

einer vorhergehenden Netzwerkstufe bereits benutzten Bitgruppen durch eine Schiebeoperation aus der Zieladresse entfernt. Damit erreicht man, daß die in der jeweiligen Stufe relevanten Bits immer an der gleichen, z.B. vordersten Bitpositionen der verbleibenden Zieladresse stehen, wodurch der Einsatz von Multiplexern zur Selektion einer Bitgruppe überflüssig wird.

Bei der Verwendung des erfindungsgemäßen Verfahrens wird angenommen, daß ein Netzwerk vorliegt, indem die Zahl der Prozessorknoten und damit die Zahl der Netzwerkein- und ausgänge geringer ist als die Zahl der zur Verfügung stehenden Vermittlungswegabschnitte. Als Folge treten sind in der jeweils höchstwertigen Bitgruppe der Zieladresse nicht mehr alle möglichen binären Werte auf, da zur Charakterisierung einer Zieladresse weniger Bits benötigt werden als zur Charakterisierung eines Vermittlungswegabschnittes.

Das Schema in Figur 4 zeigt eine Zieladresse, bei der das Bit in der Bitposition 5 in der Gruppe b konstant auf 0 gesetzt ist. Als Folge davon wird nur die Hälfte der in dem in Figur 4 gezeigten Netzwerk zur Verfügung stehenden Vermittlungswegabschnitte zur Vermittlung von Nachrichten verwendet. Sämtliche zum Wert 1 der Bitposition 5 gehörigen Vermittlungswege bleiben unbenutzt. Um dies zu vermeiden, sieht das erfindungsgemäße Verfahren vor, anstelle einer undefinierten Bitposition 5 bzw. der konstanten Belegung der Bitposition 5 mit dem Wert "0" die Übertragung eines Bitwertes aus der vorhergehenden Gruppe, in diesem Fall mit a bezeichnet, in die Bitposition 5 vorzunehmen. Das Schema in Figur 4 zeigt in anschaulicher Weise wie aus der Zieladresse, welche den Vermittlungswegabschnitt zunnächst nicht eindeutig definiert unter Zuhilfenahme der Bitposition 1 der Bitgruppe a eine vollständig definierte Adresse eines Vermittlungswegabschnittesgeneriert wird, indem der Inhalt der Bitposition 1 aus Gruppe a der vormals undefinierten Bitposition 5 aus Gruppe b zugeordnet wird. Die drei Bitwerte der Adresse des Vermittlungswegabschnittes ergeben sich damit aus der Bitpositonen 1, 4 und 3 der Zieladresse.

Mit dem vorgeschlagenen Verfahren teilt sich der Datenstrom, welcher ursprünglich nur über die Hälfte aller zur Verfügung stehenden Vermittlungswegabschnitte geführt wurde, auf nun doppelt soviele Vermittlungswegabschnitte auf, was zu einer deutlichen Erhöhung des Datendurchsatzes im Netzwerk führen kann.

Figur 5 zeigt ein Netzwerk mit 16 Ein- und Ausgängen und vier Vermittlungswegabschnitten zwischen je zwei Schaltelementen verschiedener Stufen des Netzwerkes. Das Schema in Figur 5 zeigt die Anwendung des erfindungsgemäßen Verfahrens zur Erzeugung einer Adresse eines Vermittlungswegabschnitts aus einer Zieladresse, indem die Werte der Bitpositionen 0 und 1 der Bitgruppe a der Zieladresse den auf "0" gesetzten Bits der Positionen 4 und 5 der Zieladresse zugeordnet werden. Hierdurch wird eine vollständige Adresse eines Vermittlungswegabschnittes erzeugt, welche nun aus den Bits der Bitpositionen 1, 0 und 3 der Zieladresse besteht. Der ursprüngliche Datenstrom teilt sich nun auf die vierfache Anzahl von Vermittlungswegabschnitten auf, wodurch der Datendurchsatz ebenfalls deutlich erhöht werden kann.

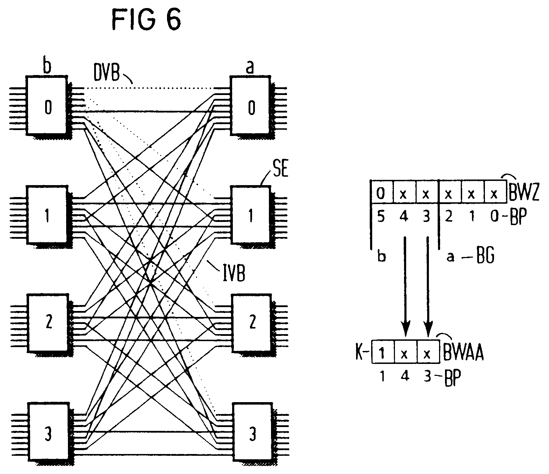

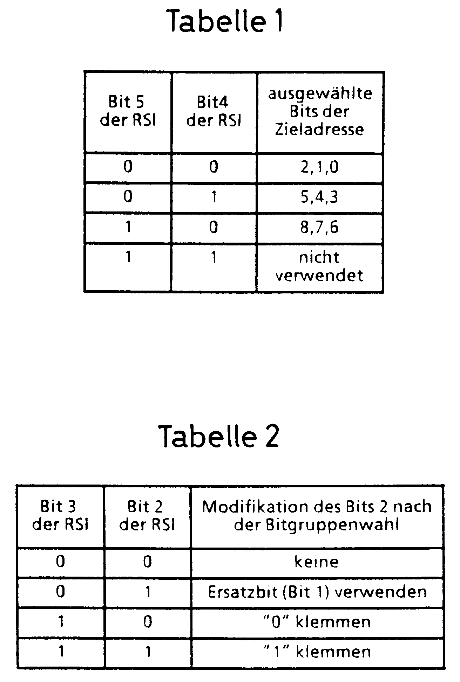

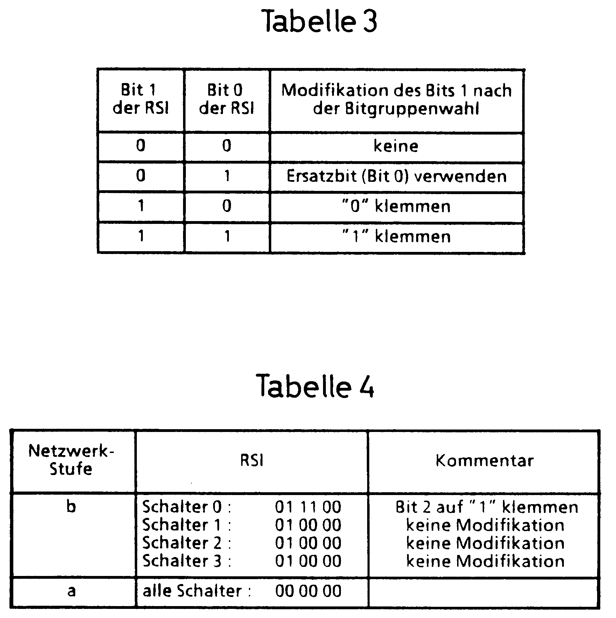

Durch die Existenz von redundanten Vermittlungswegabschnitten in Netzwerken, bei denen die Zahl N der Eingänge und Ausgänge kleiner ist als die Zahl der Vermittlungswegabschitte kann bei einer Störung oder dem Ausfall einzelner Vermittlungswegabschnitte oder Schaltelemente auf die weiterhin funktionsfähigen Verbindungen ausgewichen werden. Hierzu werden erfindungsgemäß einzelne Bitpositionen der Ausgangsadressen bzw. der Adressen zur Vermittlungswegabschnitten konstant auf die Werte "0" oder "1" gesetzt. Hierdurch werden bestimmte defekte Verbindungen nicht mehr angesprochen. Eine "1" in der höchstwertigen Bitposition der Gruppe b (Figur 6) bewirkt beispielsweise, daß nur die Ausgänge 4 bis 7 eines Schaltelementes benutzt werden, eine "0" bewirkt hingegen, daß nur die Ausgänge "0 bis 3" eines Schaltelementes benutzt werden.

Figur 6 zeigt ein Netzwerk mit 32 Ein- und Ausgängen, indem angenommen ist, daß eine der vier punktiert gezeichneten Verbindungen defekt ist und nicht mehr verwendet werden soll. Hierzu ist im Schaltelement 0 der ersten Stufe das entsprechende Bit auf den konstanten Wert "1" gesetzt.

Figur 7 zeigt ein Schaltungsbeispiel, mit dem die beschriebenen Funktionen zur Auswahl von Vermittlungswegabschnitten bzw. Ausgängen von Schaltelementen implementiert werden können. Gezeigt wird die Selektierung von Gruppen zu 3 Bits, also für den Fall von Schaltelementen mit 8 Pins. Als Ersatzbits bei einer unvollständigen Konfiguration werden die Bits der Positionen 0 und 1 verwendet. Die Schaltung besteht nach Figur 7 aus einem 9 bit breiten ersten Register, in das die Adresse des Netzwerkausgangs aus dem Datenstrom übernommen wird. In einem zweiten 6 bit breiten Register ist die Steuerinformation zur Auswahl eines Vermittlungswegabschnittes enthalten. Diese Information wird bei der Initialisierung des Netzwerks geladen oder je nach Bedarf (z.B. im Fehlerfall) modifiziert. Über zwei Stufen von Multiplexern MUX1,... MUX5 wird dann die Adresse des Ausgangs an einem Schaltelement und damit der ausgewählte Vermittlungswegabschitt bestimmt. Die Bitpositionen 4 und 5 der Steuerinformation RSI bestimmen, welche Bits der Zieladresse selektiert und zu einem Oktalwert gruppiert werden. Tabelle 1 zeigt die Auswahl der Bits der Zieladresse in Abhängigkeit von den Werten der Bits 4 und 5 der Steuerinformation RSI.

Die Bits der Positionen 3 und 2 der Steuerinformation RSI bestimmen, ob und wie das höchstwertige Bit (Bitposition 2) der Zieladresse nach der Bitgruppenwahl modifiziert wird. Dies ist in Tabelle 2

EP 0 515 989 A2

übersichtlich zusammengestellt. Tabelle 3 zeigt in welcher Weise die Bits Positionen 1 und 0 der Steuerinformation RSI bestimmen, ob und wie das Bit 1 der Zieladresse nach der Bitgruppenwahl modifiziert wird. Tabelle 4 zeigt schließlich ein Kodierungsbeispiel für ein Netzwerk mit 32 Knoten und defekten Verbindungen nach Figur 6.

In Figur 7 ist das Schaltungsbeispiel zur Realisierung des beschriebenen Verfahrens schematisch dargestellt. Die 9 Bitpositionen der Zieladresse sind in drei Bitgruppen unterteilt, und jedem der 3 : 1 Multiplexer MUX1, ..., MUX3 werden drei Bits der Zieladresse eingangsseitig zugeführt. Die Bits 4 und 5 der Steuerinformation RSI dienen zur Steuerung der Multiplexer MUX1, ... MUX3. Die Bits 3 und 2 der Steuerinformation RSI selektieren die Modifikationsbits mit Hilfe der Multiplexer MUX4 und MUX5. Die Adresse des Schaltelementausgangs bzw. des Vermittlungswegabschnittes, welcher ausgewählt worden ist, setzt sich aus den Ausgangswerten der Multiplexer MUX1, MUX4 und MUX5 zusammen.

Tabelle 1

| Bit 5 der RSI | Bit 4 der RSI | ausgewählte Bits der Zieladresse |
|---|---|---|
| 0 | 0 | 2,1,0 |
| 0 | 1 | 5,4,3 |
| 1 | 0 | 8,7,6 |
| 1 | 1 | nicht verwendet |

Tabelle 2

| Bit 3 der RSI | Bit 2 der RSI | Modifikation des Bits 2 nach der Bitgruppenwahl |
|---|---|---|
| 0 | 0 | keine |
| 0 | 1 | Ersatzbit (Bit 1) verwenden |
| 1 | 0 | "0" klemmen |
| 1 | 1 | "1" klemmen |

Tabelle 3

| Bit 1 der RSI | Bit 0 der RSI | Modifikation des Bits 1 nach der Bitgruppenwahl |
|---|---|---|
| 0 | 0 | keine |
| 0 | 1 | Ersatzbit (Bit 0) verwenden |
| 1 | 0 | "0" klemmen |
| 1 | 1 | "1" klemmen |

5

Tabelle 4

| Netzwerk-Stufe | RSI | Kommentar |
|---|---|---|
| b | Schalter 0: 01 11 00<br>Schalter 1: 01 00 00<br>Schalter 2: 01 00 00<br>Schalter 3: 01 00 00 | Bit 2 auf "1" klemmen<br>keine Modifikation<br>keine Modifikation<br>keine Modifikation |
| a | alle Schalter: 00 00 00 | |

**Patentansprüche**

1. Verfahren zur Auswahl eines Vermittlungswegabschnittes in einem mindestens zweistufigen Netzwerk mit redundanten Vermittlungswegabschnitten, bei dem für eine Zieladresse, bestehend aus mindestens $m + n$ binären Werten, wobei $n$ kleiner als $m$ ist, ein Vermittlungswegabschnitt, charakterisiert durch $m$ binäre Stellen, in der Weise ausgewählt wird, daß
   a) $n$ binäre Stellen des Vermittlungswegabschnittes mit $n$ binären Werten der Zieladresse identifiziert werden und
   b) $m - n$ binäre Werte der Zieladresse ausgewählt und den restlichen $m - n$ binären Stellen des Vermittlungswegabschittes zugeordnet werden.

2. Verfahren nach Anspruch 1, bei dem einigen der $m - n$ binären Stellen des Vermittlungswegabschnittes eine binäre Konstante anstelle eines ausgewählten binären Wertes der Zieladresse zugeordnet wird.

3. Verwendung eines Verfahrens nach einem der Ansprüche 1 oder 2 zur Vermittlung von Nachrichten in mindestens zweistufigen Netzwerken aus Schaltelementen von denen jedes $M = 2^m$ Eingänge auf $M$ Ausgänge schalten kann, wobei $n$ kleiner als $m$ ist.

4. Verwendung eines Verfahrens nach einem der Ansprüche 1 bis 2 zur Vermittlung von Nachrichten in Multiprozessorsystemen.

FIG 1

FIG 2a

FIG 2b

FIG 3 ...

# FIG 4

# FIG 5

# FIG 6

# Tabelle 1

| Bit 5 der RSI | Bit4 der RSI | ausgewählte Bits der Zieladresse |
|---|---|---|
| 0 | 0 | 2,1,0 |
| 0 | 1 | 5,4,3 |
| 1 | 0 | 8,7,6 |
| 1 | 1 | nicht verwendet |

# Tabelle 2

| Bit 3 der RSI | Bit 2 der RSI | Modifikation des Bits 2 nach der Bitgruppenwahl |
|---|---|---|
| 0 | 0 | keine |
| 0 | 1 | Ersatzbit (Bit 1) verwenden |
| 1 | 0 | "0" klemmen |
| 1 | 1 | "1" klemmen |

# Tabelle 3

| Bit 1 der RSI | Bit 0 der RSI | Modifikation des Bits 1 nach der Bitgruppenwahl |
|---|---|---|
| 0 | 0 | keine |
| 0 | 1 | Ersatzbit (Bit 0) verwenden |
| 1 | 0 | "0" klemmen |
| 1 | 1 | "1" klemmen |

# Tabelle 4

| Netzwerk-Stufe | RSI | Kommentar |
|---|---|---|
| b | Schalter 0 :  01 11 00<br>Schalter 1 :  01 00 00<br>Schalter 2 :  01 00 00<br>Schalter 3 :  01 00 00 | Bit 2 auf "1" klemmen<br>keine Modifikation<br>keine Modifikation<br>keine Modifikation |
| a | alle Schalter :  00 00 00 | |

FIG 7

# FIG 8